# EUROPEAN PATENT SPECIFICATION

(11) **EP 1 269 720 B1**
(45) Date of publication and mention of the grant of the patent: **09.02.2005**
(21) Application number: 01936126.0
(22) Date of filing: 21.03.2001
(51) Int. Cl.: H04L 29/06

(54) **A METHOD AND A SYSTEM FOR ORDERING SERVICES**
VERFAHREN UND SYSTEM ZUM BESTELLEN VON DIENSTLEISTUNGEN
PROCEDE ET SYSTEME DE COMMANDE DE SERVICES

(30) Priority: 25.03.2000 EP 00106506
(43) Date of publication of application: 02.01.2003
(73) Proprietor: Ludvigsen, Jakob Schmelling, 9000 Aalborg (DK)
(72) Inventor: Ludvigsen, Jakob Schmelling, 9000 Aalborg (DK)
(74) Representative: Gregersen, Niels Henrik
(86) International application number: PCT/EP2001/003273
(87) International publication number: WO 2001/073700

(56) References cited:
- EP-A- 0 875 871
- WO-A-97/14124
- WO-A-99/01990
- US-A- 5 986 565

## Description

### DESCRIPTION OF PRIOR ART

The present invention relates to a method for ordering services from a mobile communication apparatus, for example a mobile telephone. It relates further to a system for this method.

A number of different service ordering methods and devices are known. The service ordering in some cases includes payment of the order. The ordering (service) in the most simple version is payment for goods to be purchased. (Optionally) the goods are received manually.

US patent with number 5 986 565 discloses an individual recognition system that uses a mobile communication apparatus to more securely conduct financial data transactions. A call number stored in a mobile communications apparatus (mobile telephone) is read by a terminal unit and transmitted to a computer. The computer calls the telephone and requests a user to input a personal identification code. The personal identification code is transmitted from the mobile communications apparatus to the computer, so that the transmitted personal identification code is compared with a previously registered personal identification code for verification. Then, a purchase price is read into the terminal unit and transmitted to the computer. Settlement for payment of the purchase price is carried out in a bank account.

A financial transaction by this system requires a connection between the mobile telephone and the terminal unit. In case that the telephone is connected to the terminal unit by a wire connection or by a connection in a special holder, it is required that the user is present at the terminal unit to perform the financial transaction. Especially, if the financial transaction implies paying a parking fee late at night in an else empty parking lot, this action implies great risk for the user to be assaulted. To avoid these situations, the individual recognition system has foreseen a wireless communication link. However, this implies a first call from the mobile telephone to the terminal unit and a second call from the computer to the mobile phone. Between the first call and the second call, it is of great disadvantage, if the telephone is retrieving a call from a third person, because that call is blocking for the second call from the computer. In busy situations, this form for payment can be irritating for the buyer, the seller and further customers standing in line waiting for their chance to pay.

JP 8249530 A discloses an automatic vending machine system with which a portable mobile telephone can be utilized. The designation of an automatic vending machine and commodity is inputted by a mobile telephone set (6) so that call originating source identification information (dl) (such as a telephone number, for example), the calling information of the designated automatic vending machine and commodity selection information can be transmitted from the mobile telephone set through a communication line to the automatic vending machine. At the automatic vending machine, the designated commodity is ejected from a commodity ejecting means to the outside based on the transmitted information, and the charging information of the ejected commodity and the call originating source identification information are transmitted to a charge collecting means. Based on the transmitted charging information and call originating source identification information, the charge collecting means collects the charge from the call originating source information (such as the owner of the mobile telephone) in a postpayment system.

Furthermore, this kind of purchase is only possible in areas geographically covered by the wireless telephone network.

### SUMMARY OF THE INVENTION

It is an object of the invention to provide a method and an apparatus to improve and increase the efficiency of methods for ordering services, for example including financial transactions.

According to the invention, this is achieved by a method as described in claim 1.

The method includes mainly three devices able to be connected, a host computer system, a terminal unit and a mobile communication apparatus.

The holder of the mobile communication apparatus, which is called the user, and the service provider are registered in memory records of the host computer. For example, the host computer could be a computer in a financing institute as a bank. In this case, the host computer controls financial transactions between the user and the service provider. Alternatively, the host computer could be a computer central for a library, where all book loans from small local library units are controlled. Other examples for services using financial or non-financial transactions can easily be found with regard to the present invention.

The service provided could, for example, be delivery of goods and the service provider could be a local store, where the goods are purchased. The ordering may include payment of the service. The service could also be, as described above, loan of certain books from the service provider, which in this case is the local library. In the latter case, no payment is included in the transaction, but due to the value of the books, it is essential that the user is identified by the identification number of the communication apparatus and a security code.

The terminal unit is typically located at the place, where the service is provided. However, it is only necessary that the terminal unit is located, where the order from the user is given. In case that the user is driving in a car, the user needs not to leave the car for ordering services, because there is a wireless communication link between the mobile communication apparatus and the terminal unit. Therefore, the invention is very suitable for drive-in stores, drive in cinemas, or parking lots.

The mobile communication apparatus can, for example, be a mobile telephone connected to a public or a private telephone system. It can however also be a communication apparatus especially made for this kind of transaction. Such an apparatus could differ from a mobile telephone by not being connected to a public telephone system, and/or by not having a speaker unit and microphone. Also, for the mobile communication apparatus, it is not necessary to have a keypad. Such a mobile apparatus could be produced much cheaper than mobile telephones and much smaller. For example, such a mobile apparatus could have the overall dimensions of a credit card, which would make it much easier to carry around, for example in a wallet.

According to the invention, service information and conditions are displayed to the user. For example, the information may include the price of a service. The display can be a part of the terminal unit or functionally attached to the terminal unit. Alternatively, the mobile communication apparatus can be equipped with a display, so that the service information and service conditions are transmitted from said terminal unit to the mobile communication apparatus and displayed on the display of the mobile communication apparatus. Latter display method is preferred.

The wireless link can be a generally accessible public or private telephone system. But it can also be a link using infrared radiation for the data transfer.

Alternatively, it can be a different radio system, like the so-called Bluetooth system, which is a short range radio link for electronic devices. The Bluetooth system is independent of existing networks and operates at 2.4 GHz directly between electronic devices. It has a range of up 100 m. Use of Bluetooth radio link has a great advantage over existing telephone networks, because it is independent of any network and the implicit network conditions as, for example, geographical network coverage. By using Bluetooth, a terminal unit may register a mobile communication apparatus in its vicinity, which is able to communicate data with Bluetooth specifications. Optionally all Bluetooth using service providers may transmit their offers to the mobile communication apparatus, where the offers are displayed in the display and where the user may choose from the provided service offers.

The Bluetooth wireless link may be provided as an additional option for mobile telephone holders, where the necessary hardware for the Bluetooth system is incorporated in the telephone. Additional the mobile telephone may be provided with technology comprising the so-called Wireless Application Protocol, WAP. Thereby, also Internet options may be integrated into the system. Alternatively, the mobile communication apparatus may be an especially constructed unit for Bluetooth operation.

The wireless link is not limited to one of the mentioned possibilities, but can also comprise a combination of different links.

Possible Wap applications may include retrieval of account information and other financial transfers.

### BRIEF DESCRIPTION OF THE DRAWING

- Fig. 1: is an explanatory view showing a method for ordering services according to a preferred embodiment of the invention,
- Fig. 2: is an explanatory view showing a method for ordering services according to a second preferred embodiment of the invention, where a Bluetooth system is incorporated.

### DETAILED DESCRIPTION OF THE INVENTION

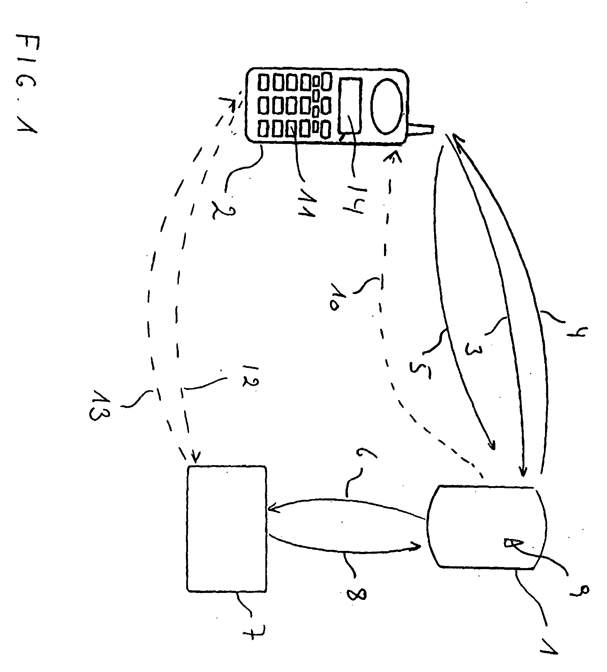

Fig. 1 is an explanatory view showing a method for ordering services according to a preferred embodiment of the invention. In order to order some goods or service, the user approaches the terminal unit 1 of the service provider. To order the service, the user calls 3 the service providers terminal unit 1 with the mobile communication apparatus 2, preferably a telephone, to order a service. The terminal unit 1 registers the identification code, for example the telephone number and transmits 4 information and conditions related to the service to the user's mobile communication apparatus, where this information is shown on a display. Alternatively, the information may be shown on a different display which is functionally connected to the terminal unit.

Acceptance of the service and the service conditions, is indicated by the user, for example by entering a user identifying security code, after which the security code or an equivalent for the security code is transmitted 5 to the terminal unit 1.

After the transmission, the connection between the mobile communication unit and the terminal unit may be terminated.

The terminal unit 1 transmits 6, for example via a telephone line, the received data to the host computer 7. The date may comprise the security code and the identification code. However, for security reasons, the datastream from the terminal unit 1 to the host computer 7 may be encrypted and only implicit contain the security code, for example by employing the security code in the encryption of the information. In the host computer, the data are controlled in connection with the service. The control may include a check, whether the user has credit enough for payment of the order. After the control, the terminal unit 1 receives 8 indications from the host computer 7 whether to accept the data from the user for providing the service. Acceptance may be indicated by a signal 9 at the terminal unit 1, for example by an audio-visual indication, after which the service is provided. Optionally, an additional notification is provided 10 to the mobile communication apparatus 2 via the so-called Short Message Service, SMS. Preferably, this message is sent from terminal unit 1 to the mobile communication apparatus 2, but the message can also be sent to the mobile communication apparatus 2 from the host computer 7.

The security code from the user may be an alphanumeric code read by a keypad 11 in the mobile communication apparatus 2. Alternatively, the security code may be a data stream that is obtained from a fingerprint sensor (not shown) on the mobile communication apparatus 2. In order to provide the security code, the user places a certain finger on the mobile communication apparatus 2, after which the code is transmitted 4 to the terminal unit 1.

The mobile communication apparatus 2 may additionally be used for contacting 12 the host computer 7 and retrieve 13 information about the registered transactions and the account status. However, this action may, but need not, be performed at a later time and independently from the original service order.

The security code may be linked to the hardware in the mobile communication apparatus 2, for example a smart card, or to the software in the apparatus 2. Transmission of the data from the mobile communication apparatus 2 may comprise DTMF tones. Alternatively, the transfer of data from the mobile communication apparatus 2 to the terminal unit 1 may be encrypted, so that unauthorised persons cannot read the code during transmission.

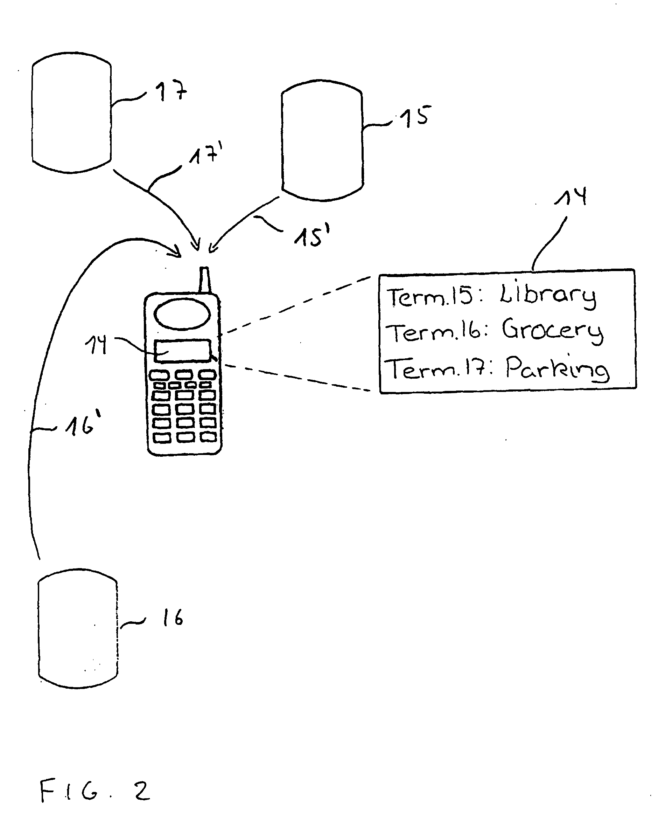

Fig. 2 is an explanatory view showing a method for ordering services according to a second preferred embodiment of the invention, where a Bluetooth system is incorporated. When the mobile communication apparatus, preferably a telephone 2, is located within the range of one or a plurality 15, 16, 17 of possible terminal units with Bluetooth transmitters, each of the terminal units 15, 16, 17 transmits 15', 16', 17' to the telephone 2 data of possible services. A list of possible services corresponding to the different service is then shown on the display 14 of the telephone. The display is shown expanded in Fig. 2.

The software for the service ordering may be provided by a smartcard in the telephone linked to the Bluetooth system. The user can scroll through the service offers and thereupon establish a link to the terminal unit 15, 16, or 17 of interest. Once the wireless link to the terminal unit 15, 16, or 17 has been established, the ordering method is analogous to the method as explained in connection with Fig. 1.

## Claims

1. A method for ordering services via a service provider's terminal unit (1), a host computer system (7) connected to said terminal unit (1), and a user's mobile communication apparatus (2) operable to communicate with said terminal unit (1) by a wireless link, wherein said mobile communication apparatus (2) comprises an identification code, and reading means, wherein the method comprises the steps of
- storing and maintaining in said host computer system (7) records of information of said user and of said service provider,
- establishing (3) a communication connection between said mobile communication apparatus (2) and said terminal unit (1) for specifying the user's request of a service provided by said service provider,
- transmitting said identification code to said terminal unit (1),
- displaying (4) service information and conditions on a display of said user's mobile communication apparatus (14),
- reading information input comprising a security code from said user by said reading means for accepting said service conditions and transmitting (5) an order comprising a datastream characteristic for said identification code and said security code to said terminal unit (1),
- transmitting (6) said datastream characteristic for said identification code and said security code and service information from said terminal unit (1) to said host computer system,
- storing and controlling in said host computer system the congruence of said identification code, said security code, said service provider and the provided service according to said records and transmitting (8) a signal from said host computer system to said terminal unit for acceptance of said order,
- after which said service is provided and an indication (9) is given by said terminal unit that said service is provided.

2. A method according to claim 1, **characterised in that** said display (14) is functionally connected to said terminal unit (1).

3. A method according to claim 1, **characterised in that** said method further comprises transmitting (4) service information and service conditions from said terminal unit (1) to said mobile communication apparatus (2) and displaying said information and conditions on a display (14) of said mobile communication apparatus (2).

4. A method according to claim 1 - 3, **characterised in that** said reading means comprise a keypad (11) for retrieving alphanumeric information.

5. A method according to claim 1 - 4, **characterised in that** said reading means comprises a fingerprint sensor.

6. A method according to claim 1 - 5, **characterised in that** said mobile communication apparatus (2) comprises a cellular telephone.

7. A method according to claim 1 - 6, **characterised in that** said wireless link comprise a generally accessible telecommunication network.

8. A method according to claim 1 - 7, **characterised in that** said wireless link comprises a short range radio link, preferably a Bluetooth radio link.

9. A method according to claim 1 - 8, **characterised in that** said wireless link comprises infrared sensors and transmitters.

10. A system comprising means for carrying out the steps for a method according to anyone of the claims 1 - 9.

## Patentansprüche

1. Verfahren zum Bestellen von Diensten über eine Dienstanbieter-Endgeräteinheit (1), ein Host-Computersystem (7), das mit der Endgeräteinheit (1) verbunden ist, und eine Anwender-Mobilkommunikationsvorrichtung (2), die so betreibbar ist, dass sie mit der Endgeräteinheit (1) über eine drahtlose Verbindung kommuniziert, wobei die Mobilkommunikationsvorrichtung (2) einen Identifizierungscode und Lesemittel umfasst, wobei das Verfahren die folgenden Schritte umfasst:
- Speichern und Halten von Informationsdatensätzen des Anwenders und des Dienstanbieters in dem Host-Computersystem (7),
- Herstellen (3) einer Kommunikationsverbindung zwischen der Mobilkommunikatonsvorrichtung (2) und der Endgeräteinheit (1), um die Anwenderanforderung eines von dem Dienstanbieter angebotenen Dienstes zu spezifizieren,
- Senden des Identifizierungscodes zu der Endgeräteinheit (1),
- Anzeigen (4) von Dienstinformationen und -bedingungen auf einer Anzeige der Anwender-Mobilkommunikationsvorrichtung (14),
- Lesen von eingegebenen Informationen, die einen Sicherheitscode von dem Anwender umfassen, durch die Lesemittel, um die Dienstbedingungen zu akzeptieren und um eine Bestellung (5), die eine Datenstromcharakteristik für den Identifizierungscode und den Sicherheitscode enthält, an die Endgeräteinheit (1) zu senden,
- Senden (6) der Datenstromcharakteristik für den Identifizierungscode und den Sicherheitscode sowie von Dienstinformationen von der Endgeräteinheit (1) zu dem Host-Computersystem,
- Speichern und Steuern der Kongruenz des Identifizierungscodes, des Sicherheitscodes, des Dienstanbieters und des angebotenen Dienstes in Übereinstimmung mit den Datensätzen in dem Host-Computersystem und Senden (8) eines Signals vom Host-Computersystem zu der Endgeräteinheit, um die Bestellung zu akzeptieren,
- woraufhin der Dienst bereitgestellt wird und durch die Endgetäteinheit ein Hinweis (9) ausgegeben wird, dass der Dienst bereitgestellt ist.

2. Verfahren nach Anspruch 1, **dadurch gekennzeichnet, dass** die Anzeige (14) mit der Endgeräteinheit (1) funktional verbunden ist.

3. Verfahren nach Anspruch 1, **dadurch gekennzeichnet, dass** das Verfahren ferner das Senden (4) von Dienstinformationen und -bedingungen von der Endgeräteinheit (1) zu der Mobilkommunikationsvorrichtung (2) und das Anzeigen der Informationen und der Bedingungen auf einer Anzeige (14) der Mobilkommunikationsvorrichtung (2) umfasst.

4. Verfahren nach den Ansprüchen 1-3, **dadurch gekennzeichnet, dass** die Lesemittel einen Tastenblock (11) zum Wiedergewinnen alphanumerischer Informationen umfassen.

5. Verfahren nach den Ansprüchen 1-4, **dadurch gekennzeichnet, dass** die Lesemittel einen Fingerabdruck-Sensor umfassen.

6. Verfahren nach den Ansprüchen 1-5, **dadurch gekennzeichnet, dass** die Mobilkommunikationsvorrichtung (2) ein Zellentelephon umfasst.

7. Verfahren nach den Ansprüchen 1-6, **dadurch gekennzeichnet, dass** die drahtlose Verbindung ein allgemein zugängliches Telekommunikationsnetz umfasst.

8. Verfahren nach den Ansprüchen 1-7, **dadurch gekennzeichnet, dass** die drahtlose Verbindung eine Kurzbereich-Funkverbindung, vorzugsweise eine Bluetooth-Funkverbindung, umfasst.

9. Verfahren nach den Ansprüchen 1-8, **dadurch gekennzeichnet, dass** die drahtlose Verbindung Infrarotsensoren und -sender umfasst.

10. System, das Mittel zum Ausführen der Schritte eines Verfahrens nach einem der Ansprüche 1-9 umfasst.

## Revendications

1. Procédé pour commander des services via une unité terminale d'un fournisseur de services (1), un système informatique hôte (7) connecté à ladite unité terminale (1), et un appareil de communication mobile de l'utilisateur (2) utilisé pour communiquer avec ladite unité terminale (1) par une liaison sans fil, dans lequel ledit appareil de communication mobile (2) comprend un code d'identification, et un moyen de lecture, dans lequel le procédé comprend les étapes consistant à
stocker et conserver dans ledit système informatique hôte (7) des enregistrements des informations dudit utilisateur et dudit fournisseur de services,
établir (3) une connexion de communication entre ledit appareil de communication mobile (2) et ladite unité terminale (1) pour spécifier la demande de l'utilisateur pour un service fourni par ledit fournisseur de services,
transmettre ledit code d'identification à ladite unité terminale (1),
afficher (4) les informations et les conditions du service sur un écran (14) dudit appareil de communication mobile de l'utilisateur,
lire l'entrée d'informations comprenant un code de sécurité provenant dudit utilisateur avec ledit moyen de lecture pour accepter lesdites conditions de service et transmettre (5) une commande comprenant une caractéristique de flux de données pour ledit code d'identification et ledit code de sécurité à ladite unité terminale (1),
transmettre (6) ladite caractéristique de flux de données pour ledit code d'identification et ledit code de sécurité et les informations de service provenant de ladite unité terminale (1) vers ledit système informatique hôte,
stocker et contrôler dans ledit système informatique hôte la conformité dudit code d'identification, dudit code de sécurité, dudit fournisseur de services et du service fourni en fonction desdits enregistrements et transmettre (8) un signal depuis ledit système informatique hôte vers ladite unité terminale pour accepter ladite commande,
après quoi ledit service est fourni et une indication (9) est donnée par ladite unité terminale pour informer de la délivrance dudit service.

2. Procédé selon la revendication 1, **caractérisé en ce que** ledit écran (14) est fonctionnellement connecté à ladite unité terminale (1).

3. Procédé selon la revendication 1, **caractérisé en ce que** ledit procédé comprend, en outre, la transmission (4) d'informations de service et de conditions de service depuis ladite unité terminale (1) vers ledit appareil de communication mobile (2) et l'affichage desdites informations et conditions sur un écran (14) dudit appareil de communication mobile (2).

4. Procédé selon la revendication 1 à 3, **caractérisé en ce que** ledit moyen de lecture comprend un clavier (11) pour récupérer des informations alphanumériques.

5. Procédé selon la revendication 1 à 4, **caractérisé en ce que** ledit moyen de lecture comprend un lecteur d'empreintes digitales.

6. Procédé selon la revendication 1 à 5, **caractérisé en ce que** ledit appareil de communication mobile (2) comprend un téléphone cellulaire.

7. Procédé selon la revendication 1 à 6, **caractérisé en ce que** ladite liaison sans fil comprend un réseau de télécommunication généralement accessible.

8. Procédé selon la revendication 1 à 7, **caractérisé en ce que** ladite liaison sans fil comprend une liaison radio à faible portée, de préférence une liaison radio Bluetooth.

9. Procédé selon la revendication 1 à 8, **caractérisé en ce que** ladite liaison sans fil comprend des capteurs et des émetteurs infrarouges.

10. Système comprenant des moyens pour réaliser les étapes d'un procédé selon l'une quelconque des revendications 1 à 9.
